# FASCICULE DE BREVET EUROPEEN

(11) **EP 3 154 048 B1**
(45) Date de publication et mention de la délivrance du brevet: **04.03.2020**
(21) Numéro de dépôt: 16188088.5
(22) Date de dépôt: 09.09.2016
(51) Int. Cl.: G09F 19/14

(54) **DISPOSITIF FORMANT AFFICHE TRIPLE**
VORRICHTUNG ZUM BILDEN EINER DREIFACHANZEIGE
TRIPLE SIGN

(30) Priorité: 06.10.2015 FR 1502077
(43) Date de publication de la demande: 12.04.2017
(73) Titulaire: Rubinstein, Patrick, 75006 Paris (FR)
(72) Inventeur: Rubinstein, Patrick, 75006 Paris (FR)
(74) Mandataire: Eidelsberg, Olivier Nathan

(56) Documents cités:
- GB-A- 191 301 054
- US-A- 922 015
- US-A- 1 967 658

## Description

La présente invention se rapporte à des dispositifs de présentation d'images, dessins, photographies ou analogues, par exemple des panneaux d'affichage, notamment publicitaires ou urbains, des tableaux ou analogues.

On connaît déjà dans l'art antérieur, par exemple de US 922 015, des tableaux ou des panneaux d'affichage qui comportent un panneau de base sur lequel est présenté un premier dessin, motif, photographie ou analogue et une pluralité de lamelles, parallèles entre elles, faisant saillies sensiblement verticalement du panneau de base et présentant sur chacun de leurs deux côtés opposés des sous dessins, sous motifs ou analogues, l'ensemble des sous dessins présentés sur les faces gauches des lamelles formant un deuxième dessin, motif, photographie ou analogue que l'on peut voir en étant placé à gauche du panneau et l'ensemble des sous dessins présentés sur les faces droites des lamelles formant un troisième dessin, motif, photographie ou analogue que l'on peut voir en étant placé à droite du panneau. Ainsi, ces dispositifs permettent de présenter, si on le souhaite, trois affiches différentes, l'une vue de la gauche, l'une vue de face et l'autre vue de la droite. On peut avoir également, si on le souhaite, la même affiche suivant les trois orientations, pour ainsi obtenir de présenter un même dessin, motif, photographie ou analogue dont le champ de vision à partir duquel on peut le voir ou le contempler est agrandi par rapport à une affiche simple classique.

On connaît déjà de l'art antérieur des affiches triples de ce genre. Les lamelles y sont réalisées par découpe d'une feuille avant collée à une feuille arrière à leur périphérie respective, les parties ainsi découpées formant des volets destinés à être pivotés et pliés pour former les lamelles issues du panneau central formé par la feuille arrière. Ces affiches triples de l'art antérieur présentent de nombreux inconvénients. Elles sont fastidieuses à fabriquer, ne pouvant être réalisées que manuellement, notamment en raison de l'opération de pliage du volet le long d'une ligne de pliage. En outre, la visibilité des trois affiches n'est pas bonne.

La présente invention vise à surmonter les inconvénients de l'art antérieur en mettant à disposition un dispositif formant affiche triple qui soit simple à fabriquer et dont les trois affiches, destinées à être vues respectivement de la gauche, de la droite et de face, présentent une grande netteté.

Suivant l'invention, le dispositif de présentation d'image formant une affiche triple est tel que défini à la revendication 1, des perfectionnements et modes de réalisation préférés étant définis dans les sous revendications.

En prévoyant ainsi de faire traverser la plaque avant par les lamelles, notamment jusqu'à ce qu'elles viennent en butée contre la plaque arrière, on améliore grandement la netteté et la visibilité des affiches, les lamelles n'étant plus tenues au panneau de base par une ligne de pliage, comme dans l'art antérieur, mais étant bloquées de part et d'autre par la plaque avant, ce qui en empêche tout mouvement, par exemple, dû aux intempéries (le vent, la pluie) qui, dans les dispositifs de l'art antérieur, ont pour effet de décaler certaines lamelles par rapport aux autres, en nuisant ainsi à la netteté et visibilité des affiches. En outre, la fabrication du dispositif de présentation formant affiche triple est simplifiée et donc accélérée, puisqu'il suffit maintenant d'enfoncer les lamelles, notamment en allant en butée jusqu'à la plaque arrière, sans avoir à effectuer des opérations compliquées de découpe, pliage et rabat des volets, comme dans l'art antérieur.

Suivant un mode de réalisation préféré de l'invention, les lamelles ont une épaisseur comprise entre 0,1 et 3mm, notamment comprise entre 0,5 et 2mm, par exemple de 1mm.

A titre d'exemple, on décrit maintenant un mode de réalisation préféré de l'invention en se reportant aux dessins dans lesquels :

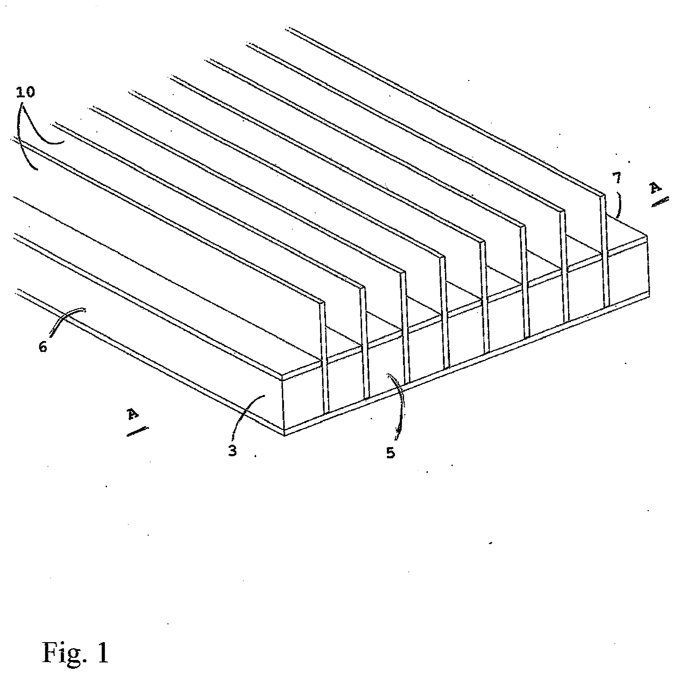

La figure 1 est une vue en perspective d'un mode de réalisation d'une affiche triple suivant l'invention ;
La figure 2 est une vue en coupe transversale suivant la ligne A-A de l'affiche triple de la figure 1 ;
La figure 3 est une vue en coupe transversale suivant la ligne A-A du panneau de base de l'affiche triple des figures 1 et 2; et
La figure 4 est une vue en coupe transversale suivant la ligne A-A du panneau central de l'affiche triple des figures 1 et 2 avant formation des fentes verticales.

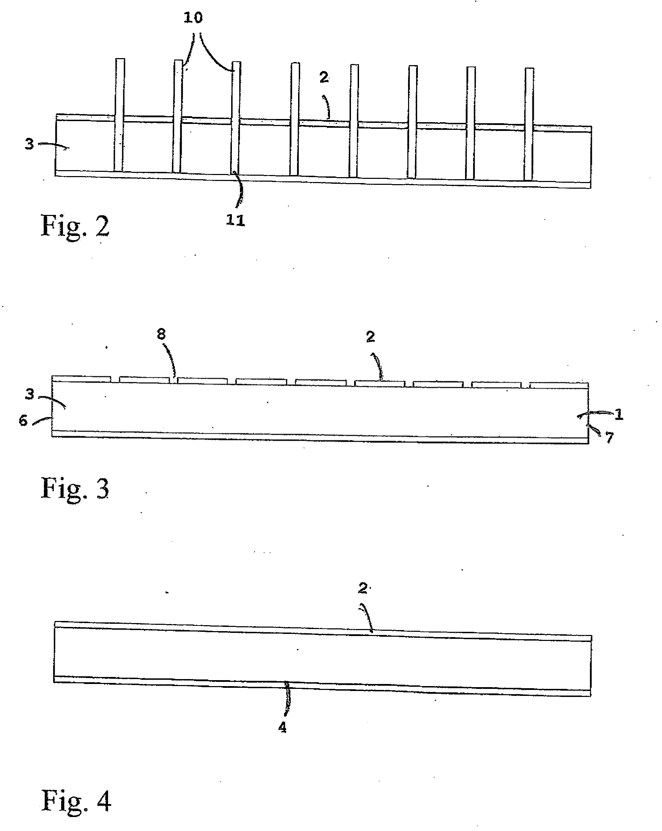

Un panneau 1 de base est constitué d'un stratifié formé d'une plaque 2 avant, constitué d'une feuille de PVC ou autre matériau analogue, notamment thermoplastique, d'une couche 3 et d'une plaque 4 arrière ou de fond, également constituée d'une feuille de PVC ou autre matériau analogue. Les deux feuilles de PVC sont fixées par collage, laminage thermique, soudure ou analogue aux faces respectivement supérieure et inférieure de la couche de mousse.
La plaque 2 avant est destinée à être disposée verticalement ou sensiblement verticalement en portant une affiche, par exemple sous la forme d'un dessin, d'une peinture, d'une photographie ou analogue destinée à être vue en se trouvant en face de la plaque 2 avant. On définit ainsi pour le panneau 1 de base et ses constituants, un bord 5 respectif inférieur, un bord respectif supérieur, à l'opposé du bord 5 inférieur (ce bord supérieur n'est pas représenté au dessin), un bord 6 latéral gauche, un bord 7 latéral droit. Le côté avant est le côté haut des figures 2 à 4 et le côté arrière ou de fond est le côté bas des figures 2 à 4.

Dans la plaque 2 avant sont formées des fentes 8 rectilignes verticales qui s'étendent sensiblement sur toute la dimension en hauteur de la plaque. Les fentes 8 traversent entièrement la plaque 2 avant pour mettre à nue la couche 3 de mousse. Ces fentes 8 ont ainsi une épaisseur (mesurée perpendiculairement au plan des figures 2 à 4) égale à celle de la plaque.

Les fentes 8 représentées sont ici rectilignes. Elles pourraient être de forme différente, notamment incurvée en arc de cercle, en arc d'ellipse, en sinusoïde ou tout autre forme.

Sur la face avant des parties restantes de la plaque avant, il est présenté des sous affiches centrales qui ensemble forme une affiche centrale. Ces sous affiches peuvent être réalisées sous la forme de dessins, peintures, photographies ou analogues, réalisées directement sur la plaque avant ou apposées dessus, par exemple par collage. Par exemple, pour réaliser l'affiche centrale, on prend une photographie que l'on souhaite présenter et on la découpe en bandelettes de largeur correspondant à la distance entre deux fentes successives, puis on colle les bandelettes dans les zones de la face avant de la plaque avant entre chaque fente pour reconstituer la photographie formant l'affiche centrale finale, chaque bandelette constituant une sous affiche centrale.

Des lamelles 10, notamment en un matériau plus dur que la mousse, par exemple en métal, sont réalisées en ayant une forme de plaque rectangulaire d'épaisseur sensiblement égale à la largeur des fentes 8. Les lamelles 10 sont introduites par leur chant ou bord 11 arrière dans les fentes 8 et à travers la couche de mousse 3 jusqu'à ce que le bord 11 respectif vienne buter contre la plaque 4 arrière, en contact direct avec celle ci. La plus grande dureté du matériau des lamelles par rapport à celui de la mousse fait que lors de l'introduction, les lamelles traverse la mousse. Cependant la mousse reste en contact des deux côtés contre la lamelle et la maintient bien verticale.

Les lamelles comportent sur la partie de leurs faces respectivement gauche et droite destinées à rester à l'extérieur du panneau de base après l'introduction dans la mousse, des sous affiches respectivement gauche et droite, suivant le même principe que l'affiche centrale. Par exemple, pour réaliser l'affiche gauche, respectivement droite, on prend une photographie que l'on souhaite présenter et on la découpe en bandelettes de largeur correspondant à la largeur de la partie des lamelles destinée à faire saillie à l'extérieur du panneau de base. On colle ensuite les bandelettes sur ces parties gauche et droite destinées à faire saillie à l'extérieur du panneau de base de chaque lamelle pour reconstituer la photographie formant l'affiche gauche, respectivement droite, finale, chaque bandelette constituant une sous affiche gauche, respectivement droite.

Une mousse préférée est une mousse expansée en polystyrène extrudé. Cependant, on pourrait envisager d'autres mousses, notamment des mousses en polystyrène expansé, qu'elles soient à cellule ouverte ou cellule fermée.

Les deux feuilles sont de préférence en PVC. Elles peuvent cependant être en tout autre matériau, notamment toutes toiles classiques pour former des dessins ou peindre.

On a représenté des lamelles ayant toutes la même hauteur à l'extérieur du panneau de base. On pourrait prévoir des hauteurs différentes.

## Revendications

1. Dispositif de présentation d'image formant une affiche triple, comportant un panneau (1) de base, constitué d'une plaque (4) arrière ou de fond et d'une plaque (2) avant sur laquelle est présentée une affiche centrale destinée à être vue en étant face au panneau de base ; et une pluralité de lamelles faisant saillies de la plaque (2) avant en étant à distance les unes des autres, chaque lamelle (10) portant sur une face gauche une sous affiche gauche respective et sur une face droite une sous affiche droite respective de sorte que l'ensemble des sous affiches gauches forment une affiche gauche destinée à être vue de la gauche du panneau de base et l'ensemble des sous affiches droites forment une affiche droite destinée à être vue de la droite du panneau de base, **caractérisé en ce que** chaque lamelle (10) pénètre par son bord (11) arrière dans le panneau (1) de base en traversant la plaque (2) avant, chaque lamelle venant buter par son bord arrière contre la plaque (4) arrière.

2. Dispositif suivant la revendication 1, **caractérisé en ce qu'**est disposée dans le panneau de base, entre les deux plaques (2, 4) avant et arrière, une couche (3) de mousse, notamment en polystyrène extrudé, traversée par les lamelles.

3. Dispositif suivant la revendication 1 ou 2, **caractérisé en ce que** la plaque (2) avant est une feuille de PVC.

4. Dispositif suivant l'une des revendications 1 à 3, **caractérisé en ce qu** il est formé dans la plaque (2) avant des fentes (8) longitudinales par lesquelles passe, à adaptation serrée ou en force, chaque lamelle, notamment jusqu'à la plaque arrière.

5. Dispositif suivant l'une des revendications 1 à 4, **caractérisé en ce que** l'affiche centrale est réalisée sous la forme d'une pluralité de sous affiches centrales disposées les unes à côté des autres en laissant entre elles un interstice correspondant à l'endroit où les lamelles traversent la plaque (2) avant.

6. Dispositif suivant les revendications 4 et 5, **caractérisé en ce que** les fentes sont formées dans les interstices, notamment sur toute la largeur des interstices.

7. Dispositif suivant l'une des revendications 1 à 6, **caractérisé en ce que** chaque lamelle est verticale, et notamment de section rectiligne.

8. Dispositif suivant l'une des revendications 1 à 6, **caractérisé en ce que** les lamelles sont incurvées en conservant une distance égale les unes par rapport aux autres.

9. Dispositif suivant l'une des revendications 1 à 8, **caractérisé en ce que** les lamelles ont une épaisseur de 0,5mm à 2,0mm.

## Patentansprüche

1. Vorrichtung zur Bilddarstellung, die eine Dreifachanzeige bildet, umfassend eine Basistafel (1), bestehend aus einer hinteren oder Bodenplatte (4) und einer vorderen Platte (2), auf der eine zentrale Anzeige dargestellt ist, die dazu bestimmt ist, der Basistafel zugewandt betrachtet zu werden; und eine Vielzahl von Lamellen, die von der vorderen Platte (2) hervorstehen und voneinander beabstandet sind, wobei jede Lamelle (10) auf einer linken Seite eine jeweilige linke Teilanzeige und auf einer rechten Seite eine jeweilige rechte Teilanzeige trägt, sodass die Gesamtheit der linken Teilanzeigen eine linke Anzeige bilden, die dazu bestimmt ist, von der linken Seite der Basistafel aus betrachtet zu werden, und die Gesamtheit der rechten Teilanzeigen eine rechte Anzeige bilden, die dazu bestimmt ist, von der rechten Seite der Basistafel aus betrachtet zu werden, **dadurch gekennzeichnet, dass** jede Lamelle (10) mit ihrer hinteren Kante (11) in die Basistafel (1) eindringt und dabei die vordere Platte (2) durchquert, wobei jede Lamelle mit ihrer hinteren Kante gegen die hintere Platte (4) stößt.

2. Vorrichtung nach Anspruch 1, **dadurch gekennzeichnet, dass** in der Basistafel zwischen der vorderen und hinteren Platte (2, 4) eine Schaumschicht (3), insbesondere aus extrudiertem Polystyrol, angeordnet ist, die von den Lamellen durchquert wird.

3. Vorrichtung nach Anspruch 1 oder 2, **dadurch gekennzeichnet, dass** die vordere Platte (2) eine PVC-Folie ist.

4. Vorrichtung nach einem der Ansprüche 1 bis 3, **dadurch gekennzeichnet, dass** in der vorderen Platte (2) Längsschlitze (8) ausgebildet sind, durch die jede Lamelle, insbesondere bis zur hinteren Platte, mit eng anliegender oder eingepresster Passung verläuft.

5. Vorrichtung nach einem der Ansprüche 1 bis 4, **dadurch gekennzeichnet, dass** die zentrale Anzeige aus einer Vielzahl von zentralen Teilanzeigen gebildet ist, die nebeneinander angeordnet sind und dabei zwischen sich einen Zwischenraum freilassen, der der Stelle entspricht, an der die Lamellen die vordere Platte (2) durchqueren.

6. Vorrichtung nach den Ansprüchen 4 und 5, **dadurch gekennzeichnet, dass** die Schlitze in den Zwischenräumen, insbesondere über die gesamte Breite der Zwischenräume, ausgebildet sind.

7. Vorrichtung nach einem der Ansprüche 1 bis 6, **dadurch gekennzeichnet, dass** jede Lamelle vertikal ist und insbesondere einen geradlinigen Querschnitt aufweist.

8. Vorrichtung nach einem der Ansprüche 1 bis 6, **dadurch gekennzeichnet, dass** die Lamellen gebogen sind, wobei sie untereinander einen gleichbleibenden Abstand beibehalten.

9. Vorrichtung nach einem der Ansprüche 1 bis 8, **dadurch gekennzeichnet, dass** die Lamellen eine Breite von 0,5 mm bis 2,0 mm aufweisen.

## Claims

1. A device for presenting an image forming a triple display, comprising a base panel (1) made up of a rear or bottom plate (4) and a front plate (2) on which a central display is shown intended to be seen from head on to the base panel; and a plurality of lamellas protruding from the front plate (2) and spaced apart from one another, each lamella (10) carrying on a left face a respective left sub-display and on a right face a respective right sub-display such that the left sub-displays in their entirety form a left display intended to be seen from the left of the base panel and the right sub-displays in their entirety form a right display intended to be seen from the right of the base panel, **characterized in that** each lamella (10) penetrates with its rear edge (11) into the base panel (1) by passing through the front plate (2), each lamella abuting the rear plate (4) with its rear edge.

2. The device according to Claim 1, **characterized in that** a layer (3) of foam, in particular made of extruded polystyrene, through which the lamellas pass, is disposed in the base panel between the two front and rear plates (2, 4).

3. The device according to Claim 1 or 2, **characterized in that** the front plate (2) is a sheet of PVC.

4. The device according to any of Claims 1 to 3, **characterized in that** longitudinal slits (8) are formed in the front plate (2) through which each lamella passes, adapted to be tight or forced, in particular to the rear plate.

5. The device according to any of Claims 1 to 4, **characterized in that** the central display is made in the form of a plurality of central sub-displays disposed next to one another leaving a gap between them corresponding to the place where the lamellas cross the front plate (2) .

6. The device according to Claims 4 and 5, **characterized in that** the slits are formed in the gaps, in particular over the whole width of the gaps.

7. The device according to any of Claims 1 to 6, **characterized in that** each lamella is vertical, and in particular with a rectilinear section.

8. The device according to any of Claims 1 to 6, **characterized in that** the lamellas are curved while remaining equidistant from one another.

9. The device according to any of Claims 1 to 8, **characterized in that** the lamellas have a thickness of 0.5 mm to 2.0 mm.
